# EUROPEAN PATENT SPECIFICATION

(11) **EP 1 099 068 B1**
(45) Date of publication and mention of the grant of the patent: **29.12.2004**
(21) Application number: 99930028.8
(22) Date of filing: 27.05.1999
(51) Int. Cl.: F16J 15/12, F02F 11/00

(54) **GASKET FOR A MECHANICAL JOINT**
DICHTUNG FÜR MECHANISCHE VERBINDUNG
GARNITURE D'ETANCHEITE DESTINEE A UN JOINT MECANIQUE

(30) Priority: 02.06.1998 SE 9801952
(43) Date of publication of application: 16.05.2001
(73) Proprietor: AB VOLVO PENTA, 405 08 Göteborg (SE)
(72) Inventor: KÄLLBERG, Tommy, S-431 44 Mölndal (SE)
(74) Representative: Hellbom, Lars Olof
(86) International application number: PCT/SE1999/000902
(87) International publication number: WO 1999/063249

(56) References cited:
- US-A- 4 272 085
- US-A- 4 968 045
- US-A- 5 540 452

## Description

The present invention relates to a packing for a mechanical joint, comprising a first and second packing element which are joined together and which are each provided with at least one opening to allow the passage of a medium.

When two components, which enclose a medium such as a pressurized gas or liquid, are to be joined together by means of a mechanical joint, it is vitally important that the medium should not leak out into the surroundings. To this end a packing is arranged between the components, which packing is clamped together by the mechanical joint. The medium will then pass through the mechanical joint and through one or more openings arranged in the packing.

Certain components, such as exhaust-gas turbo units and cylinder heads of internal combustion engines, are flowed through by various media such as combustion gases and cooling water. These media also pass through the various mechanical joints which are found in an internal combustion engine. A packing which simultaneously seals against leakage of very hot combustion gases on the one hand and coolant on the other hand must exhibit special properties such as heat resistance and sealing effectiveness. The packing must also withstand the very high clamping forces which are present in a mechanical joint.

Steel-made packings are found which are provided with a plurality of openings which are intended to be flowed through by combustion gases on the one hand and coolant on the other hand. Around the openings which are intended to be flowed through by the coolant, a layer of rubber is vulcanized. Once the packing is mounted in the mechanical joint, the rubber has been shown however to become compressed to the extent that all electricity in the rubber vanishes, resulting in the loss of its sealing properties. In the event of vibrations in the mechanical joint, the rubber will be worn to pieces for lack of elasticity.

Steel-made packings are also found in which recesses have been made to house a rubber seal. The rubber seal is vulcanized to the steel packing at the edges of the recess. When the packing is clamped together in the mechanical joint the rubber will maintain, its elasticity, since the steel packing absorbs the clamping forces. It has proved however to be complicated and expensive to produce such a packing.

Document US,A,5 540 452 discloses the subject-matter of the preamble of claim 1 and, in particular, a gasket insert assembly comprising a gasket body made of steel. An aperture is arranged in the body and a sealing member is mounted in the aperture by means of deformable tabs.

The object of the present invention is to achieve a packing which exhibits good sealing properties in the sealing in of various media.

Another object of the present invention is to achieve a packing which is cheap and simple to produce.

This is achieved with a packing as defined in claim 1.

such a packing is cheap and simple to produce, since a snug fit between the first and second packing element is not necessary, as would be the ease if the edges of the packing elements were to be vulcanized together.

The invention is to be described in greater detail below with reference to an illustrative embodiment shown in the appended drawing, in which
Fig. 1 relates to a packing according to the present invention, and
Fig. 2 shows a section of the packing through the line II-II in Fig. 1.

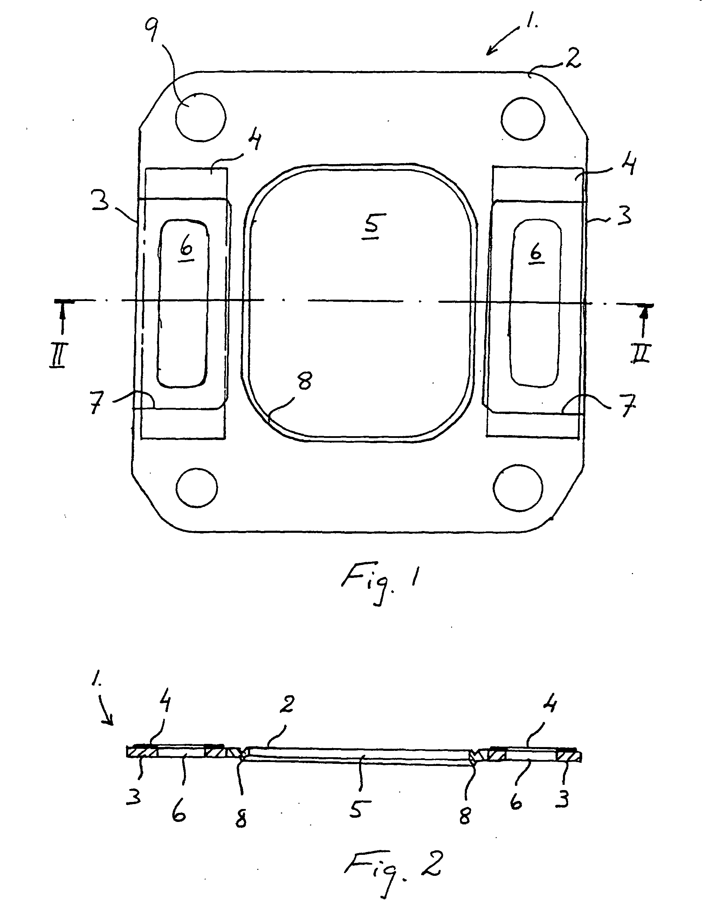

Fig. 1 shows a packing 1 according to the present invention, comprising a first packing element 2 and two second packing elements 3 which are joined together by means of an elastic strip such as a tape 4. Each of the packing elements 2, 3 are provided with at least one opening 5, 6 to allow the passage of a medium. The first and second packing elements 2, 3 are arranged in essentially the same plane, as is shown in a section through the line II-II in Fig. 2.

The two second packing elements 3 are arranged in recesses 7 which are made on two opposite sides of the opening 5 in the first packing element 2. The shape of the second packing elements 3 essentially corresponds to the shape of the recesses 7 in the first packing element 2. The tape 4 is preferably thin and arranged on one side of the packing 1. It is conceivable to arrange tape 4 on both sides of the packing 1. The opening 6 in the second packing elements 3 extends also through the tape 4. The tape 4 is self-adhesive and consists of a band which is provided with an adhesive. When the packing 1 is mounted in the mechanical joint, the tape 4 will not affect the sealing properties of the packing 1.

The packing 1 according to the shown illustrative embodiment is suited to sealing a mechanical joint between an exhaust manifold and a turbo unit (not shown). The hot exhaust gases pass through the opening 5 in the first packing element 2. In order to obtain good sealing properties, a lip 8 is formed around the opening 5 in the first packing element 2. In order to withstand the hot exhaust gases, the first packing element 2 consists of steel, preferably stainless steel.

To prevent overheating by the hot exhaust gases, the turbo unit is cooled by cooling water. The cooling water flows from the internal combustion engine to the turbo unit through the mechanical joint and hence also through the packing 1. In order to obtain a good seal against leakage of the cooling water in the mechanical joint, an elastic packing element must be arranged around the cooling water ducts. This is brought about by the second packing elements 3, which preferably consist of a polymer such as rubber or plastic.

In a mechanical joint there are very high clamping forces present. The first packing element 2, which consists of steel, will have a force-absorbing effect upon the packing 1 in the mechanical joint. This means that the second packing elements 3 will be clamped together to a certain threshold so that the elasticity in the second packing elements 3 is preserved, thereby having a positive effect upon the sealing properties. The second packing elements 3, by virtue of their elasticity, are also able to absorb relative movements in the mechanical joint, which movements can arise during vibration.

The first and second packing elements 2, 3 are fixed and secured by the mechanical joint. The object of the tape 4 is to fix the position of the second packing elements 3 in relation to the first packing element 2 when the packing 1 is mounted in the mechanical joint, so that the respective second packing element 3 ends up at the intended place in the mechanical joint.

The packing 1 is provided at each corner with a hole 9 through which holes screws or bolts are intended to extend when the packing 1 is mounted in the mechanical joint.

It is conceivable to use the packing 1 according to the present invention in a mechanical joint between components other than an exhaust manifold and a turbo unit. For example, the packing 1 can be used as a cylinder head gasket in an internal combustion engine.

In servicing and maintenance of the mechanical joint, the first packing element 2 can be reconditioned and reused, whilst the second packing elements 3 are discarded and exchanged for new packing elements 3.

In the production of the packing 1 according to the invention, the first packing element 2 is preferably punched to its final form. After this the second packing elements 3 are punched such that they receive an outer contour corresponding to the recesses 7 in the first packing element 2. The second packing elements 3 are subsequently joined to the first packing element 2 with the aid of the tape 4. The first packing element 2 can possibly be degreased in order to increase the adhesiveness of the tape 4. Finally, the holes 6 are punched in the second packing elements 3 simultaneously through the tape 4 and through the second packing elements 3.

The shown illustrative embodiment of the packing 1 according to the invention has two second packing elements 3 made from a polymer. It is possible however to arrange one, two or more second packing elements 3 to the first packing element 2.

## Claims

1. Packing for a mechanical joint, comprising a first and second packing element (2,3), said first and second packing elements (2,3) being arranged in essentially the same plane and joined together, said first and second packing elements (2,3) being each provided with at least one opening (5,6) said openings (5,6) defining a flow passage of a medium,
**characterized in that** at least one elastic strip (4) is arranged so as to join together the first and second packing elements (2,3) and **in that** said elastic strip (4) is provided with an adhesive.

2. Packing according to Claim 1, **characterized in that** the second packing element (3) is arranged in a recess (7) in the first packing element (2).

3. Packing according to any one of the preceding claims, **characterized in that** the adhesive of said elastic strip (4) is in form of an adhesive tape (4) arranged on one side of the packing.

4. Packing according to Claim 3, **characterized in that** the elastic strip (4) comprises an opening corresponding to the opening (6) in the second packing element (3).

5. Packing according to any one of the preceding claims, **characterized in that** the first packing element (2) consists of steel and the second packing element (3) consists of a polymer.

6. Packing according to claim 1 or 2, **characterized in that** the elastic strip (4) is self-adhesive.

7. Packing according to any one of the preceding claims, **characterized in that** two second packing elements (3) are arranged on opposite sides of the opening (5) in the first packing element (2) and both second packing elements (3) are attached to the first packing element by said elastic strip (4).

## Patentansprüche

1. Dichtung für eine mechanische Verbindung, mit einem ersten (2) und einem zweiten Dichtungselement (3), wobei das erste (2) und das zweite Dichtungselement (3) in im Wesentlichen derselben Ebene angeordnet sind und miteinander verbunden sind, wobei das erste (2) und das zweite Dichtungselement (3) jeweils mit zumindest einer Öffnung (5, 6) versehen sind, welche Öffnungen (5, 6) einen Durchflusskanal eines Mediums definieren,
**dadurch gekennzeichnet, dass** zumindest ein elastischer Streifen (4) so angeordnet ist, dass er das erste (2) und das zweite Dichtungselement (3) verbindet, und dass der elastische Streifen (4) mit einem Klebstoff versehen ist.

2. Dichtung nach Anspruch 1, **dadurch gekennzeichnet, dass** das zweite Dichtungselement (3) in einer Ausnehmung (7) in dem ersten Dichtungselement (2) angeordnet ist.

3. Dichtung nach einem der vorangehenden Ansprüche, **dadurch gekennzeichnet, dass** der Klebstoff des elastischen Streifens (4) die Form eines Klebebands (4) hat, das an einer Seite der Dichtung angeordnet ist.

4. Dichtung nach Anspruch 3, **dadurch gekennzeichnet, dass** der elastische Streifen (4) eine Öffnung aufweist, die der Öffnung (6) in dem zweiten Dichtungselement (3) entspricht.

5. Dichtung nach einem der vorangehenden Ansprüche, **dadurch gekennzeichnet, dass** das erste Dichtungselement (2) aus Stahl besteht und das zweite Dichtungselement (3) aus einem Polymer.

6. Dichtung nach Anspruch 1 oder 2, **dadurch gekennzeichnet, dass** der elastische Streifen (4) selbstklebend ist.

7. Dichtung nach einem der vorangehenden Ansprüche, **dadurch gekennzeichnet, dass** zwei zweite Dichtungselemente (3) auf gegenüberliegenden Seiten der Öffnung (5) in dem ersten Dichtungselement (2) angeordnet sind und beide zweiten Dichtungselemente (3) an dem ersten Dichtungselement mittels des elastischen Streifens (4) angebracht sind.

## Revendications

1. Une garniture pour un joint mécanique, comportant un premier et deuxième élément de garniture (2, 3), lesdits premier et deuxième éléments de garniture (2, 3) étant adaptés essentiellement dans le même plan et reliés ensemble, lesdits premier et deuxième éléments de garniture (2, 3) étant munis chacun d'au moins une ouverture (5, 6), lesdites ouvertures (5, 6) délimitant un passage d'écoulement d'un médium, **caractérisée en ce qu'**au moins une bande élastique (4) est adaptée afin de relier ensemble les premier et deuxième éléments de garniture (2, 3) et **en ce que** la bande élastique (4) est munie d'un adhésif.

2. Une garniture selon la revendication 1, **caractérisée en ce que** le deuxième élément de garniture (3) est adapté dans un évidement (7) se trouvant dans le premier élément de garniture (2).

3. Une garniture selon l'une quelconque des revendications précédentes, **caractérisée en ce que** l'adhésif de ladite bande élastique (4) est sous forme d'un ruban adhésif (4) adapté sur un côté de la garniture.

4. Une garniture selon la revendication 3, **caractérisée en ce que** la bande élastique (4) comporte une ouverture correspondant à l'ouverture (6) dans le deuxième élément de garniture (3).

5. Une garniture selon l'une quelconque des revendications précédentes, **caractérisée en ce que** le premier élément de garniture (2) consiste d'acier et le deuxième élément de garniture (3) consiste d'un polymère.

6. Une garniture selon la revendication 1 ou 2, **caractérisée en ce que** la bande élastique (4) est auto-adhésive.

7. Une garniture selon l'une quelconque des revendications précédentes, **caractérisée en ce que** deux deuxièmes éléments de garniture (3) sont adaptés sur les côtés opposés de l'ouverture (5) dans le premier élément de garniture (2) et tous deux deuxièmes éléments de garniture (3) sont attachés au premier élément de garniture par ladite bande élastique (4).
